# EUROPEAN PATENT APPLICATION

(11) **EP 2 520 484 A2**
(43) Date of publication of application: **07.11.2012**
(21) Application number: 12166105.2
(22) Date of filing: 30.04.2012
(51) Int. Cl.: B63B 27/10, B63B 35/00

(54) **Apparatus and methods of positioning a subsea object**

(30) Priority: 02.05.2011 US 201161481458 P
(71) Applicant: Hallin Marine Singapore Pte. Ltd., Singapore 508988 (SG)
(72) Inventor: Payne, John Anthony, 508988 SINGAPORE (SG); Giddens, John Hallin, 508988 SINGAPORE (SG)
(74) Representative: Tischner, Oliver

(57) **Abstract**

A manipulator tool (100) for installing and retrieving objects from a fixed or floating structure (1) in a subsea tidal environment includes an articulated arm (22) attached to the fixed or floating structure. The tool may be configured to compensate for movement of the objects due to tidal forces. In one embodiment, a stewart platform (103) is used as a compensator to maintain the objects in a substantially stationary position in the tidal environment.

## Description

### CROSS-REFERENCE TO RELATED APPLICATIONS

This application claims benefit of U.S. Provisional Patent Application Serial No. 61/481,458, filed on May 2, 2011, which patent application is incorporated herein by reference in its entirety.

### BACKGROUND OF THE INVENTION

### Field of the Invention

Embodiments of the present invention generally relate to apparatus and methods of positioning a subsea object. Particularly, embodiments of the present invention relate to a tool for positioning subsea objects from a fixed or floating structure in a subsea tidal environment.

### Description of the Related Art

One form of alternative energy rapidly gaining interest is tidal energy. Tidal energy involves harnessing power from tidal flows in the sea.

Tidal turbines are often used to extract power from the tidal flow. A tidal turbine typically includes a tower, a nacelle, and one or more rotors that converts the energy present in water that moves at a certain velocity relative to the seabed into rotation. The tidal turbine also includes an alternator for converting the rotation into electricity. These tidal turbines are usually installed on the seabed from a vessel using a crane with wires and a hook.

The process of installing or retrieving a tidal turbine is complicated by the tidal current. When the velocity of the tidal current increases, it is difficult to control the position of the tidal turbine under water using the wires and hook. As a result, the installation and retrieval process is generally time consuming and labor intensive.

There is, therefore, a need for apparatus and methods of positioning a tidal turbine in a subsea environment. There is also a need for an apparatus for positioning a subsea object that is capable of compensating for movement of the subsea object due to waves and tidal current.

### SUMMARY OF THE INVENTION

Embodiments of the present invention generally relate to a tool for positioning a subsea object. In one embodiment, a manipulator tool for positioning a subsea object in a tidal environment includes an articulated arm; a compensator attached to the articulated arm for maintaining the subsea object in a substantially stationary position relative to a fixed location, wherein the compensator allows the subsea object to move in at least two degrees of freedom; a docking unit for coupling the subsea object to the compensator; and a control unit configured to move at least one of the articulated arm and the compensator. In another embodiment, the compensator includes at least two actuators actuatable by the control unit to move the compensator.

In another embodiment, the tool includes one or more rigid arms mounted to a fixed or floating structure. The one or more rigid arms may be configured to compensate for movements of the subsea object in six degrees of freedom, thereby maintaining the subsea object in a substantially fixed position relative to the seabed. The tool may be used for installation and retrieval of subsea objects in general.

In another embodiment, a manipulator includes an articulated arm and hydraulic cylinders for moving the arm. A compensator such as a stewart platform may be integrated into the manipulator to compensate the motions of the vessel relative to the seabed foundation, thereby facilitating installation or retrieval of the subsea object from the seabed foundation.

In another embodiment, a method of positioning a subsea object in a body of water includes providing an articulated arm coupled to a compensator having an engagement device; engaging the compensator to the subsea object using the engagement device; operating the articulated arm to lower the subsea object into the body of water; and compensating for movement of the subsea object relative to a fixed location in the body of water, thereby maintaining the subsea object in a substantially stationary position relative to the fixed location.

### BRIEF DESCRIPTION OF THE DRAWINGS

So that the manner in which the above recited features of the present invention can be understood in detail, a more particular description of the invention, briefly summarized above, may be had by reference to embodiments, some of which are illustrated in the appended drawings. It is to be noted, however, that the appended drawings illustrate only typical embodiments of this invention and are therefore not to be considered limiting of its scope, for the invention may admit to other equally effective embodiments.

Figure 1 illustrates an embodiment of a manipulator for positioning a subsea object.

Figure 2 is a perspective view of an exemplary compensator of Figure 1.

Figure 3 shows the manipulator of Figure 1 in a lower, supported position.

Figure 4 shows the profile of an arm of the manipulator of Figure 1.

Figure 5 illustrates another embodiment of a compensator suitable for use with the manipulator of Figure 1.

Figure 6 illustrates another embodiment of a compensator suitable for use with the manipulator of Figure 1.

### DETAILED DESCRIPTION

Embodiments of the present invention provide a manipulator for positioning an object in a body of water such as a sea or river. The manipulator may be mounted to a fixed or floating structure. For example, the manipulator may be mounted to a movable structure supported by the seabed. In another example, the manipulator may be mounted to a vessel.

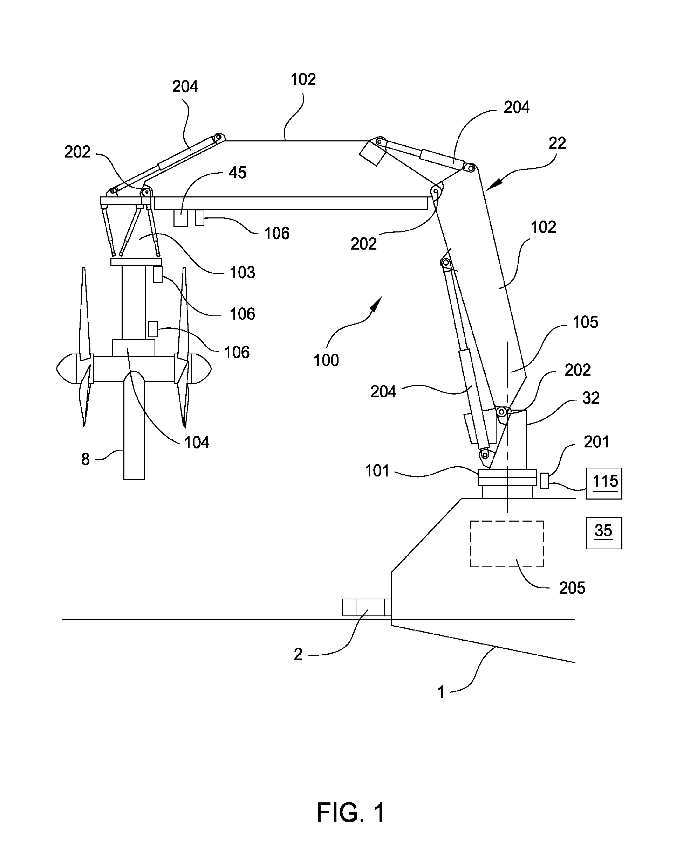

Figure 1 shows an embodiment of a manipulator 100 for positioning an object in the sea. The manipulator 100 is installed on the deck of a vessel 1 or other fixed or floating structure. The manipulator 100 includes an articulated arm 22 and a stewart platform 103 connected to the arm's 22 distal end. A docking unit 104 may be attached to the stewart platform 103 to facilitate connection to the subsea object, such as a tidal turbine. An optional retainer 2 may be attached to the vessel's transom or other suitable location for retaining the articulated arm 22.

In one embodiment, the manipulator 100 is coupled to the vessel 1 using a slew bearing 101. The slew bearing 101 is provided on a base 32 of the manipulator 100. The slew bearing 101 allows the manipulator 100 rotate around a vertical axis 105, thereby enlarging the working area of the manipulator 100. The slewing of the manipulator 100 is actuated by a motor 201. The motor 201 is operated by a control unit 115 that receives input from an operator or a sensor.

The articulated arm 22 of the manipulator 100 includes one or more arm members 102. As shown, the arm 22 includes two arm members 102 configured to provide the arm 22 with a range of freedom to pick up and deposit subsea objects in a wide area. The arm members 102 are coupled to each other using pivotal connections 202. The articulated arm 22 may be provided with additional arm members 102, for example, a total of three of four arm members, to increase its range of movement. The relative position of the arm members 22 is controlled by hydraulic cylinders 204 or other suitable actuators. These cylinders 204 are operated by the control unit 115 that receives input from an operator or a sensor. Hydraulic power is optionally provided by a hydraulic power pack 205 that is preferably located below the deck of the vessel 1. In another embodiment, the cylinders 204 may be pneumatically or electrically powered.

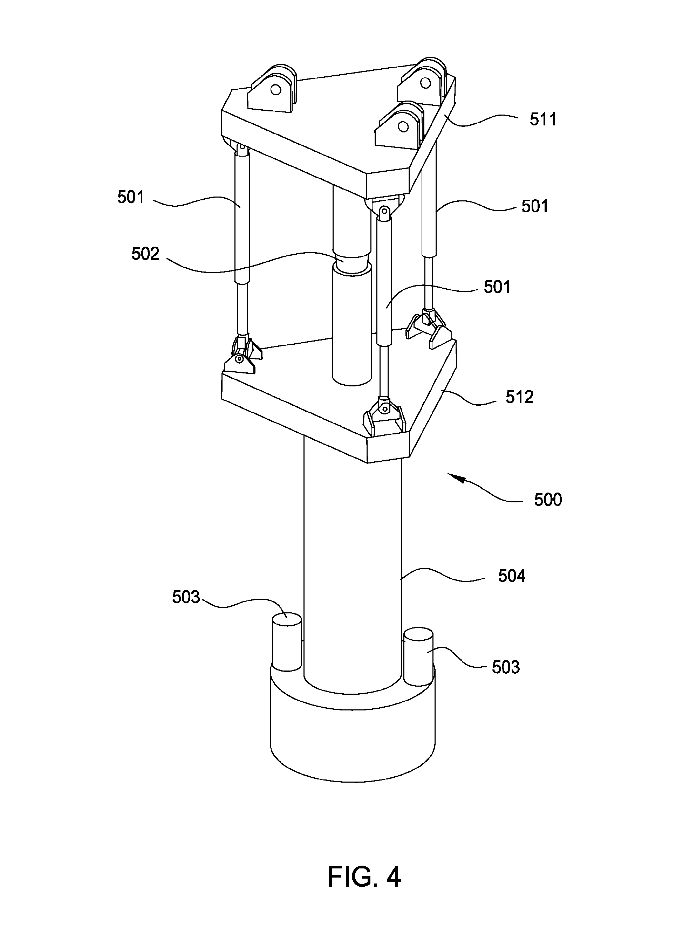

The size and shape of the arm members 102 may be the same or different. In this respect, the base 32 of the articulated arm 22 may be considered an arm member. The arm members 102 may be elongated, rigid members having a variety of outer shapes, such as arcuate, polygonal, or combinations thereof. For example, the arm members 102 may have a round, trapezoidal, or a square cross-section. One or more portions of the arm 22 may optionally have a streamlined shape to minimize the tidal current forces acting on the articulated arm 22. For example, the arm member 102 or portions that submerge into the sea during positioning of a subsea object may have a streamline shape 203. As shown in Figure 4, the distal arm member 102 has a tapered edge in the direction facing the tidal current and an arcuate outer surface facing away from the tidal current. In another embodiment, the arm member 102 may have an arcuate edge facing the tidal current, or other portions of the arm member 102. In yet another embodiment, at least a portion of the arm member may be fitted with a streamline shaped member for reducing drag on the arm member.

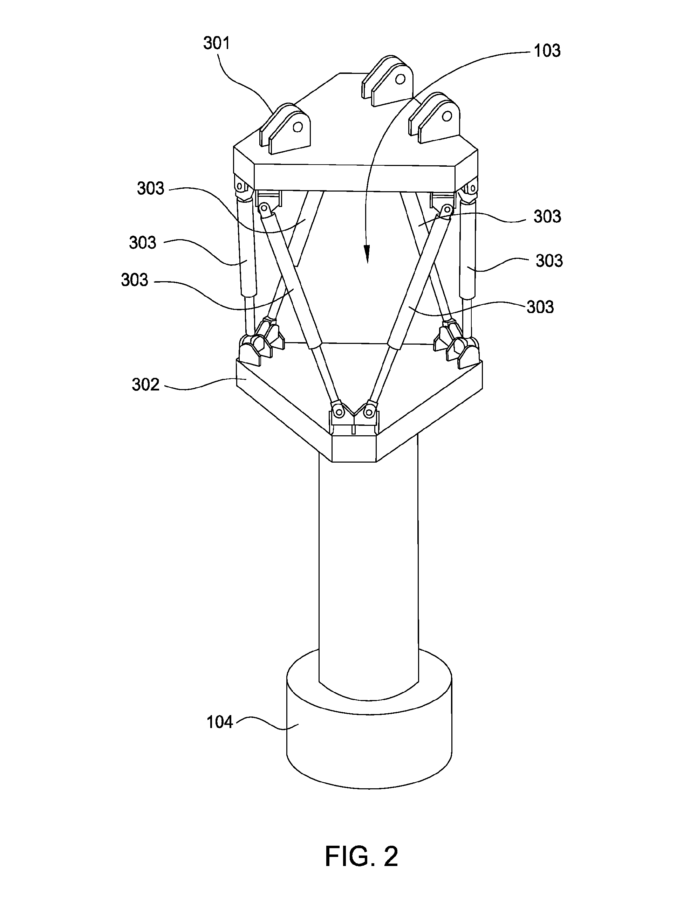

Figure 2 is a perspective view of an exemplary stewart platform 103. As a suitable example of a compensator, the stewart platform 103 allows the retained subsea object to move in six degrees of freedom relative to the manipulator arm 22. The stewart platform 103 has an upper frame 301 and a lower frame 302. In one embodiment, the frames 301, 302 have a triangular shaped perimeter. The upper frame 301 is connected to the distal end of the manipulator arm 22 using a pivotal connection 202 and a hydraulic cylinder 204. The upper frame 301 is connected to the lower frame 302 using a plurality of hydraulic cylinders 303. As shown, six cylinders are used, although any suitable number of cylinders may be used, such as three, four, five, or more cylinders. The six cylinders are arranged such that two cylinders are attached to the same corner of the upper frame 301, but the two cylinders are attached to different, adjacent corners of the lower frame 302. Although a stewart platform is disclosed herein, other suitable types of compensators capable of allowing 6 degrees of freedom to the subsea object are also applicable.

The docking unit 104 is attached to the lower frame 302 of the stewart platform 103. The lower frame 302 can be connected to a number of different exchangeable docking units that are tailored for attachment to different subsea objects to be moved by the manipulator 100. After engagement, the docking unit 104 provides a rigid connection to the subsea object. The engagement or disengagement of docking unit may be controlled by the operator or the control unit 115. In one embodiment, the docking unit 104 is pre-installed on the lower frame 302, and the docking unit 104 is used to engage or disengage the subsea object. For example, the docking unit may engage or disengage from a docking head on the subsea object. In another embodiment, the docking unit 104 is pre-installed on the subsea object, and the lower frame 302 is used to engage or disengage the subsea object via the docking unit 104. In addition to the docking unit, other types of engagement devices suitable for engaging the subsea object are equally applicable. In another embodiment, an engagement device such as the docking unit may be integral with the compensator.

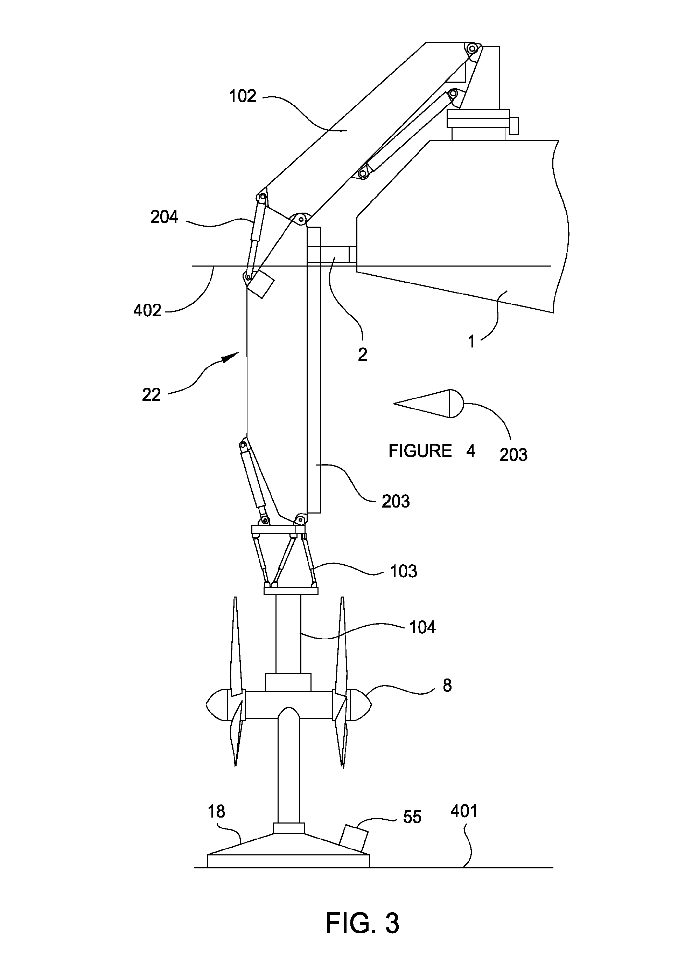

An optional retainer 2 may serve as an additional support for the arm 22, either before engaging with the docking unit 104 on the subsea object located on the seabed 401 during a retrieval operation, or prior to disengaging the docking unit to disconnect from the subsea object located on the seabed during an installation operation. Figure 3 shows the articulated arm 22 supported by the retainer 2. In this respect, the deflection of the arm in the water is reduced. The retainer 2 is preferably installed onto the vessel 1 at as low a position as possible, such as near the sea level 402. This position provides the most stability for the arm 102 of the manipulator. In one embodiment, a receiving area of the retainer 2 may have a contour corresponding to the shape of the side of the arm 22 being held.

The control unit 115 is used to control movement of the manipulator 100. The control unit 115 is configured to receive data from one or more sensors and maintain the subsea object in a substantially stationary position relative to a fixed point on the seabed in response to the receive data. The control unit 115 includes a programmable central processing unit that is operable with a memory, a mass storage device, an input controller, and a display unit. Additionally, the control unit 115 includes well-known support circuits such as power supplies, clocks, cache, input/output circuits and the like. The control unit 115 is capable of receiving data from sensors and other devices and capable of controlling devices connected to it.

In an exemplary embodiment, the control unit 115 may receive data from a plurality of sensors positioned at various locations configured to facilitate positioning or retrieval of the subsea object. Referring to Figures 1 and 3, the control unit 115 may receive data from a gyro sensor 35 located on the vessel 1 and a sonar 45 located on the articulating arm 22. Data from the sonar 45 on the articulating arm 22 may be used to establish the distance and direction of its location relative to a fixed point on the seabed. Acoustic waves are emitted from the sonar 45 to a reflector 55 located at a fixed point on the seabed 401. Reflected signal received by the sonar 45 is transmitted to the control unit 115. The gyro sensor 35 on the vessel 1 may be used to establish movement of the vessel 1 in six degrees of freedom. The data from the sonar 45 may be combined with the data from the gyro sensor 35 allow the control unit 115 to establish the position and orientation of the subsea object suspended from the manipulator 100 relative to the location of the fixed point on the seabed 401. After processing the data, the control unit 115 commands the actuators of the stewart platform 103 and/or the articulating arm 22 in a manner that keeps the subsea object in a substantially stationary position relative to the subsea object on the seabed 401.

In one embodiment, the manipulator 100 may include a monitoring system. One or more subsea cameras 106 may be provided on the stewart platform 103, docking unit 104, arm member 102, and combinations thereof. The cameras 106 allow the subsea operation to be monitored in real time.

During an installation operation, the control unit 115 moves the docking unit 104 of the articulating arm 22 into engagement with a subsea object such as a tidal turbine 8 on the vessel 1. Figure 1 shows the articulating arm 22 positioning the tidal turbine 8 above the water just before entry. The articulating arm 22 may enter the water such that the streamline portion of the arm 22 faces the tidal current. When the tidal turbine 8 is in the water, tidal current may act on the tidal turbine and the portion of the articulating arm in the water as well as the vessel 1, thereby moving the tidal turbine 8 away from the turbine base 18 located on the seabed 401. To compensate for the movement, data from the gyro sensor 35 and the sonar 45 are used by the control unit 115 to determine the position and orientation of the tidal turbine 8 relative to the turbine base 18. In response to the determined position and orientation, the control unit 115 may actuate one or more hydraulic cylinders 303 of the stewart platform 103 and/or the hydraulic cylinders 204 of the articulating arm 22 to maintain the tidal turbine 8 at a substantially stationary position relative to the turbine base 18. In addition, the control unit 115 may move the vessel to compensate for the movement or send a signal to the vessel controls to move the vessel. Figure 3 shows the tidal turbine 8 attached to the turbine base 18. It can also be seen that the articulating arm 22 is resting against the retainer 2 on the vessel 1. Thereafter, the docking unit 104 is disconnected from the tidal turbine 8, and the articulating arm 22 is retrieved to surface.

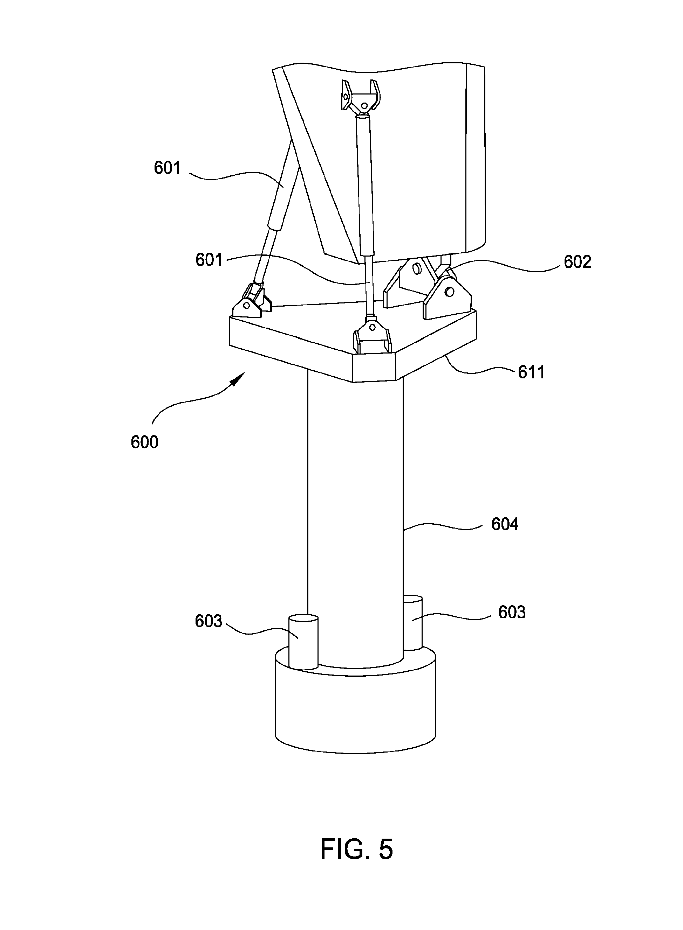

Figure 5 illustrates another embodiment of a compensator 500 for maintaining the subsea object in a substantially stationary position relative to the fixed location. The compensator 500 is suitable for use with the articulating arm 22 described above. The compensator 500 may compensate for the motions of the subsea object relative to the seabed in at least two degrees of freedom, for example, pitch and roll. As shown, the compensator 500 includes a set of platforms 511, 512 and three hydraulic cylinders 501 coupling the upper platform 511 to the lower platform 512. In addition, a ball joint 502 couples the lower platform 512 to the upper platform 511. One or more slew motor 503 are integrated into the docking unit 504 to provide rotational movement.

In operation, the heave and surge motion can be compensated by the hydraulic cylinders 501 and arm members 102 of the manipulator 22. The sway motion can be compensated by the slew motor 201 of the slew bearing 101 of the manipulator 100 and the arm members 102 of the manipulator 100. The yaw motion can be compensated by the actuating slew motors 503 of the docking unit 504.

Figure 6 illustrates another embodiment of a compensator 600 for maintaining the subsea object in a substantially stationary position relative to the fixed location. The compensator 600 is suitable for use with the articulating arm 22 described above. The compensator 600 may compensate for the motions of the subsea object relative to the seabed in at least two degrees of freedom, for example, pitch and roll. As shown, the compensator 600 includes a platform 611 and two hydraulic cylinders 601 coupling the platform 611 to the articulating arm 22. The platform 611 is also connected to the arm member 102 using a hinge 602 that allows for pitch and roll movement. One or more slew motor 603 are integrated into the docking unit 604 to provide rotational movement.

In operation, the heave and surge motion can be compensated by the hydraulic cylinders 601 and arm members 102 of the manipulator 22. The sway motion can be compensated by the slew motor 201 of the slew bearing 101 of the manipulator 100 and the arm members 102 of the manipulator 100. The yaw motion can be compensated by the actuating slew motors 603 of the docking unit 604.

In one embodiment, a manipulator tool for positioning a subsea object in a tidal environment includes an articulated arm; a compensator attached to the articulated arm for coupling with the subsea object, wherein the compensator allows the subsea object to move in at least two degrees of freedom; and a control unit configured to move at least one of the articulated arm and the compensator.

In one or more of the embodiments described herein, the compensator includes at least two actuators actuatable by the control unit to move the compensator. In another embodiment, the compensator includes six actuators. In another embodiment, the compensator further comprises two platforms coupled to each other using six hydraulic cylinders.

In one or more of the embodiments described herein, the articulated arm includes at least two arm members pivotable relative to each other. In one embodiment, the tool includes a hydraulic cylinder for moving the at least two arm members relative to each other. In another embodiment, the articulated arm is rotatable about the vertical axis. In yet another embodiment, the tool includes a slewing motor for rotating the articulated arm.

In one or more of the embodiments described herein, the tool includes a sonar for determining distance and direction of the manipulator from a fixed point in a seabed. In embodiment, the control unit is configured to receive data from the sonar, to process the received data, and to move the articulated arm to compensate for movement relative to the fixed point in response to the received data.

In one or more of the embodiments described herein, the control unit is configured to receive data from a gyro sensor, to process the received data, and to move the articulated arm to compensate for movement relative to the fixed point in response to the received data.

In one or more of the embodiments described herein, the tool includes a docking unit attached to the compensator, wherein the docking unit is adapted to connect with a docking head on the subsea object.

In one or more of the embodiments described herein, the compensator is attachable to a docking unit on the subsea object.

In one or more of the embodiments described herein, the tool includes a camera for monitoring movement of the subsea object.

In one or more of the embodiments described herein, the articulated arm includes a streamlined shape to reduce drag of the articulated arm. In one embodiment, the streamlined shape is provided by a fitted member.

In one or more of the embodiments described herein, the manipulator tool is mounted to a structure, and the structure includes a retainer for supporting the articulated arm.

In one or more of the embodiments described herein, the subsea object may be a tidal turbine.

In one or more of the embodiments described herein, the tool includes an engagement device for engaging the subsea object. In one embodiment, the engagement device comprises a docking unit attached to the compensator.

In one embodiment, a floating assembly includes a floating structure and a manipulator tool in accordance with one embodiment described herein.

In one embodiment, a movable assembly supported by a seabed includes a movable structure supported by the seabed and a manipulator tool in accordance with one embodiment described herein.

In one embodiment, a method of positioning a subsea object in a body of water includes providing an articulated arm coupled to a compensator having an engagement device; engaging the compensator to the subsea object using the engagement device; operating the articulated arm to lower the subsea object into the body of water; and compensating for movement of the subsea object relative to a fixed location in the body of water, thereby maintaining the subsea object in a substantially stationary position relative to the fixed location.

In one or more of the embodiments described herein, compensating movement of the subsea object comprises measuring data related to distance and orientation of the manipulator from the fixed location; and sending the measured data to a control unit, whereby the control unit operates at least one of the articulated arm and the compensator to compensate for movement of the subsea object. In another embodiment, the method includes measuring movement of a structure on which the articulating arm is located; and sending the measured data to the control unit, whereby measured data related to movement of the structure is combined with measured data related to distance and orientation to determine operation of the articulated arm and compensator.

In one or more of the embodiments described herein, the engagement device comprises a docking unit configured to engage the subsea object. In one embodiment, the subsea object comprises a tidal turbine.

While the foregoing is directed to embodiments of the present invention, other and further embodiments of the invention may be devised without departing from the basic scope thereof, and the scope thereof is determined by the claims that follow.

## Claims

1. A manipulator tool for positioning a subsea object in a tidal environment, comprising:
an articulated arm;
a compensator attached to the articulated arm for coupling with the subsea object, wherein the compensator allows the subsea object to move in at least two degrees of freedom; and
a control unit configured to move at least one of the articulated arm and the compensator.

2. The tool of claim 1, wherein the compensator includes at least two actuators actuatable by the control unit to move the compensator; optionally,
wherein the compensator includes six actuators; and optionally,
wherein the compensator further comprises two platforms coupled to each other using six hydraulic cylinders.

3. The tool of claim 1 or 2, wherein the articulated arm includes at least two arm members pivotable relative to each other; optionally,
further comprising a hydraulic cylinder for moving the at least two arm members relative to each other; optionally,
wherein the articulated arm is rotatable about the vertical axis; and optionally,
further comprising a slewing motor for rotating the articulated arm.

4. The tool of any one of claims 1 to 3, further comprising a sonar for determining distance and direction of the manipulator from a fixed point in a seabed; and optionally,
wherein the control unit is configured to receive data from the sonar, to process the received data, and to move the articulated arm to compensate for movement relative to the fixed point in response to the received data.

5. The tool of any one of claims 1 to 4, wherein the control unit is configured to receive data from a gyro sensor, to process the received data, and to move the articulated arm to compensate for movement relative to the fixed point in response to the received data.

6. The tool of any one of claims 1 to 5, further comprising a docking unit attached to the compensator, wherein the docking unit is adapted to connect with a docking head on the subsea object.

7. The tool of any one of claims 1 to 6, wherein the compensator is attachable to a docking unit on the subsea object; optionally,
further comprising a camera for monitoring movement of the subsea object.

8. The tool of any one of claims 1 to 7, wherein the articulated arm includes a streamlined shape to reduce drag of the articulated arm; optionally,
wherein the streamlined shape is provided by a fitted member.

9. The tool of any one of claims 1 to 8, wherein the manipulator tool is mounted to a structure, and the structure includes a retainer for supporting the articulated arm; and optionally,
wherein the subsea object comprises a tidal turbine.

10. The tool of any one of claims 1 to 9, further comprising an engagement device for engaging the subsea object; optionally,
wherein the engagement device comprises a docking unit attached to the compensator.

11. A floating assembly, comprising:
a floating structure; and
a manipulator tool as claimed in any one of claims 1 to 10.

12. A movable assembly supported by a seabed, comprising:
a movable structure supported by the seabed; and
a manipulator tool as claimed in any one of claims 1 to10.

13. A method of positioning a subsea object in a body of water, comprising:
providing an articulated arm coupled to a compensator having an engagement device;
engaging the compensator to the subsea object using the engagement device;
operating the articulated arm to lower the subsea object into the body of water; and
compensating for movement of the subsea object relative to a fixed location in the body of water, thereby maintaining the subsea object in a substantially stationary position relative to the fixed location.

14. The method of claim 13, wherein compensating movement of the subsea object comprises:
measuring data related to distance and orientation of the manipulator from the fixed location; and
sending the measured data to a control unit, whereby the control unit operates at least one of the articulated arm and the compensator to compensate for movement of the subsea object.

15. The method of claim 14, further comprising:
measuring movement of a structure on which the articulating arm is located;
and
sending the measured data to the control unit, whereby measured data related to movement of the structure is combined with measured data related to distance and orientation to determine operation of the articulated arm and compensator.
